(19)

Europäisches
Patentamt

European
Patent Office

Office européen
des brevets

(11) **EP 4 183 477 A1**

(12) **EUROPEAN PATENT APPLICATION**
published in accordance with Art. 153(4) EPC

(43) Date of publication:
**24.05.2023 Bulletin 2023/21**

(21) Application number: **21842278.0**

(22) Date of filing: **25.06.2021**

(51) International Patent Classification (IPC):
**B01D 69/06** *(2006.01)*  **B01D 69/08** *(2006.01)*
**B01D 69/12** *(2006.01)*  **B01D 71/02** *(2006.01)*
**B01D 71/26** *(2006.01)*  **B01D 71/36** *(2006.01)*
**B01D 53/22** *(2006.01)*

(52) Cooperative Patent Classification (CPC):
**B01D 53/22; B01D 69/06; B01D 69/08;**
**B01D 69/12; B01D 71/02; B01D 71/26; B01D 71/36**

(86) International application number:
**PCT/JP2021/024167**

(87) International publication number:
**WO 2022/014301 (20.01.2022 Gazette 2022/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.07.2020 JP 2020122054**

(71) Applicant: **SUMITOMO CHEMICAL COMPANY,**
**LIMITED**
**Tokyo 103-6020 (JP)**

(72) Inventors:
• **TOYAMA, Keisuke**
  **Osaka-shi, Osaka 554-8558 (JP)**
• **KAWARA, Kensuke**
  **Osaka-shi, Osaka 554-8558 (JP)**
• **YOSHIMARU, Chikae**
  **Osaka-shi, Osaka 554-8558 (JP)**
• **KASAHARA, Shohei**
  **Osaka-shi, Osaka 554-8558 (JP)**

(74) Representative: **Winter, Brandl - Partnerschaft**
**mbB**
**Alois-Steinecker-Straße 22**
**85354 Freising (DE)**

(54) **GAS SEPARATION MEMBRANE AND METHOD FOR PRODUCING SAME**

(57) A gas separation membrane selectively permeable to a specific gas component includes a first porous layer, and a separation function layer provided on a first surface of the first porous layer. The separation function layer contains a hydrophilic resin. The first surface has a wetting tension of greater than or equal to 38 mN/m and less than or equal to 52 mN/m.

FIG.1

EP 4 183 477 A1

**Description**

TECHNICAL FIELD

The present invention relates to a gas separation membrane, a method for manufacturing a gas separation membrane, a gas separation membrane element, a gas separation device, and a gas separation method.

BACKGROUND ART

It is known that a polymer membrane using a polymer compound is used for selective separation of a specific component contained in a liquid, a gas, a solid, a mixture containing at least two of them, or the like. For example, Japanese Patent No. 6130607 (PTL 1) discloses a $CO_2$ gas separation membrane in which a separation function layer containing a hydrophilic resin is provided on a support layer. Patent Document 1 indicates that a composition containing a hydrophilic resin is applied onto a hydrophobic porous membrane of a support layer to form a separation function layer.

CITATION LIST

PATENT LITERATURE

PTL 1: Japanese Patent No. 6130607

SUMMARY OF INVENTION

TECHNICAL PROBLEM

However, if an application liquid containing a hydrophilic resin is applied onto a hydrophobic porous membrane, film thickness unevenness may occur in a liquid film formed by the application liquid, resulting in generation of a region with no separation function layer on a part of the porous membrane. In such a region, all gas components in a feed gas fed permeate the gas separation membrane. Therefore, a non-selective gas separation membrane that does not exhibit a function of separating a specific gas component contained in the feed gas may be obtained, or the amount of permeation of a gas component less capable of permeating the gas separation membrane may locally increase, resulting in deterioration of the separation performance of the gas separation membrane. It has also been proposed to add a surfactant for improving coatability to an application liquid, or apply a surfactant to a coated surface of a hydrophobic porous membrane in advance for suppressing generation of the above-described region. In such a case, it has been found that the separation performance of the gas separation membrane is degraded over time due to, for example, exudation of a part of the separation function layer on a side opposite to the application liquid-coated surface of the porous membrane.

An object of the present invention is to provide a gas separation membrane which is excellent in separation performance and can be inhibited from being degraded over time, and a method for manufacturing the gas separation membrane.

SOLUTION TO PROBLEM

The present invention provides a gas separation membrane, a method for manufacturing a gas separation membrane, a gas separation membrane element, a gas separation device, and a gas separation method as shown below.

[1] A gas separation membrane selectively permeable to a specific gas component,

the gas separation membrane including a first porous layer, and a separation function layer provided on a first surface of the first porous layer,
the separation function layer containing a hydrophilic resin,
the first surface having a wetting tension of greater than or equal to 38 mN/m and less than or equal to 52 mN/m.

[2] The gas separation membrane according to [1], in which the first porous layer has a moisture absorption rate of less than or equal to 0.20 wt% at a temperature of 30°C and a relative humidity of 75% RH.

[3] The gas separation membrane according to [1] or [2], in which the first porous layer contains at least one of a polyolefin resin and a fluorine-containing resin.

[4] The gas separation membrane according to any one of [1] to [3], in which the first porous layer contains one or more of polyethylene, polypropylene and polytetrafluoroethylene.

[5] The gas separation membrane according to any one of [1] to [4], in which the first porous layer has a maximum pore size of less than or equal to 0.2 $\mu$m as measured by a bubble point method.

[6] The gas separation membrane according to any one of [1] to [5], in which the first porous layer has an average pore size of less than or equal to 0.1 $\mu$m.

[7] The gas separation membrane according to any one of [1] to [6], in which the first porous layer is a sheet-shaped or hollow porous material.

[8] The gas separation membrane according to any one of [1] to [7], in which the separation function layer is gelled.

[9] The gas separation membrane according to any one of [1] to [8], in which the separation function layer further contains an alkali metal compound.

[10] The gas separation membrane according to any one of [1] to [9], in which the separation function layer further contains one or more selected from the group consisting of an amino acid, an aminosulfonic acid and an aminophosphonic acid.

[11] The gas separation membrane according to any one of [1] to [10], in which the specific gas component is an acidic gas.

[12] A method for manufacturing the gas separation membrane according to any one of [1] to [11], the method including:

adjusting a wetting tension of the first surface to greater than or equal to 38 mN/m and less than or equal to 52 mN/m by performing surface activation treatment on the first porous layer; and
applying an application liquid containing the hydrophilic resin to the first surface.

[13] The method for manufacturing the gas separation membrane according to [12], in which the surface activation treatment is at least one of corona treatment and plasma treatment.

[14] A method for manufacturing a gas separation membrane selectively permeable to a specific gas component,

the gas separation membrane containing a first porous layer, and a gel-like separation function layer containing a hydrophilic resin,
the method including:

performing corona treatment on at least one surface of the first porous layer at an amount of treatment of greater than or equal to 90 W·min/m$^2$ and less than or equal to 800 W·min/m$^2$; and
applying an application liquid containing the hydrophilic resin to the surface subjected to corona treatment in the performing corona treatment,
the first porous layer being a sheet-shaped or hollow resin porous material.

[15] The method for manufacturing the gas separation membrane according to [14], in which the first porous layer contained in the gas separation membrane has a moisture absorption rate of less than or equal to 0.20 wt% at a temperature of 30°C and a relative humidity of 75% RH.

[16] The method for manufacturing the gas separation membrane according to [14] or [15], in which the resin porous material contains one or more of polyethylene, polypropylene and polytetrafluoroethylene.

[17] A separation membrane element for separating a specific gas component from a source gas containing the specific gas component, the separation membrane element including: the gas separation membrane according to any one of [1] to [11];

a feed-side space for feeding the source gas to the gas separation membrane;
a permeation-side space for a permeate gas that has permeated the gas separation membrane; and
a sealing portion for preventing mixing of the source gas in the feed-side space and the permeate gas in the permeation-side space.

[18] A separation membrane module including: the separation membrane element according to [17];

a source gas feeding port for feeding the source gas to the gas separation membrane;
a retentate gas discharge port for discharging the source gas that does not permeate the gas separation membrane; and
a permeate gas discharge port for discharging the permeate gas.

[19] A gas separation device including the separation membrane module according to [18].

[20] A gas separation method for separating a specific gas component by bringing a source gas containing at least the specific gas component into contact with the gas separation membrane according to any one of [1] to [11].

ADVANTAGEOUS EFFECT OF INVENTION

According to the present invention, it is possible to provide a gas separation membrane which is excellent in separation performance and can be inhibited from being degraded over time, and a method for manufacturing the gas separation membrane.

BRIEF DESCRIPTION OF DRAWINGS

Fig. 1 is a schematic cross-sectional view schematically showing an example of a gas separation membrane of the present invention.
Fig. 2 is a schematic cross-sectional view schematically showing another example of a gas separation membrane of the present invention.
Fig. 3 is a schematic perspective view showing an example of a gas separation membrane element of the present invention, in which a partially cutout portion is provided.
Fig. 4 is a schematic perspective view showing another example of a gas separation membrane element of the present invention, in which a partially cutout portion is provided.
Fig. 5 is an outline schematic diagram illustrating a gas separation device used in examples.

DESCRIPTION OF EMBODIMENTS

(Gas separation membrane)

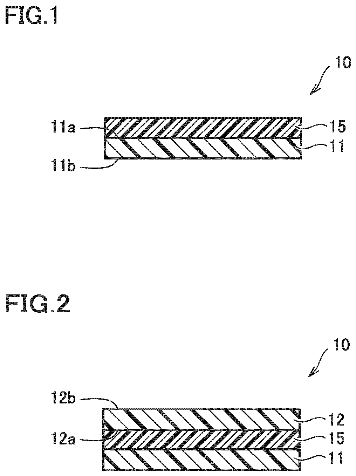

Figs. 1 and 2 are schematic cross-sectional views schematically showing an example of a gas separation membrane according to an embodiment. A gas separation membrane 10 is selectively permeable to a specific gas component. As shown in Fig. 1, gas separation membrane 10 includes a first porous layer 11, and a separation function layer 15 provided on a first surface 11a of first porous layer 11. Separation function layer 15 contains a hydrophilic resin. First surface 11a of first porous layer 11 has a wetting tension of greater than or equal to 38 mN/m and less than or equal to 52 mN/m.
The specific gas component that selectively permeates gas separation membrane 10 is preferably an acidic gas. Examples of the acidic gas include carbon dioxide ($CO_2$), hydrogen sulfide ($H_2S$), sulfur oxide ($SO_x$), and nitrogen oxide ($NO_x$). The specific gas component is preferably carbon dioxide or hydrogen sulfide, more preferably carbon dioxide.
Gas separation membrane 10 can be used for a gas separation membrane element described later. It is preferable that first porous layer 11 is disposed on the permeation-side space side with respect to separation function layer 15 in the separation membrane element described later.
As shown in Fig. 2, gas separation membrane 10 may include a second porous layer 12 on separation function layer 15 on a side opposite to first porous layer 11. It is preferable that second porous layer 12 is disposed on the feed-side space side with respect to separation function layer 15 in the separation membrane element.
Gas separation membrane 10 may further include a third porous layer on first porous layer 11 on a side opposite to separation function layer 15. Gas separation membrane 10 may further include a fourth porous layer on second porous layer 12 on a side opposite to separation function layer 15.

(First porous layer)

First porous layer 11 can be used as a support layer for supporting separation function layer 15. First porous layer 11 can be in directly contact with separation function layer 15. First porous layer 11 is preferably a layer to which an application liquid containing a hydrophilic resin and aimed at forming separation function layer 15 is applied. First porous layer 11 has porosity with high gas permeability so as not to be resistant to diffusion of a source gas supplied to separation function layer 15 or a specific gas component contained in the source gas in gas separation membrane 10.
First porous layer 11 has first surface 11a on which separation function layer 15 is provided. First surface 11a is a surface that is in direct contact with the separation function layer 15. A wetting tension of first surface 11a is greater than or equal to 38 mN/m, and may be greater than or equal to 40 mN/m, or greater than or equal to 42 mN/m. The wetting tension of first surface 11a is less than or equal to 52 mN/m, and may be less than or equal to 50 mN/m, or less than or equal to 48 mN/m. The wetting tension of first surface 11a can be measured by a method described in examples described later. The larger the value of the wetting tension of first surface 11a, the higher the hydrophilicity of first surface 11a.

When the wetting tension of first surface 11a is greater than or equal to 38 mN/m, first surface 11a can be inhibited from repelling an application liquid containing a hydrophilic resin and aimed at forming separation function layer 15 when the application liquid is applied to first surface 11a. This enables suppression of generation of a region with no separation function layer 15 on a part of first porous layer 11, so that deterioration of non-permeability (barrier property) to gas components other than a specific gas component that selectively permeates gas separation membrane 10 (hereinafter, sometimes referred to as "other gas components") can be suppressed to obtain gas separation membrane 10 having good separation performance. By setting the wetting tension of first surface 11a within the above-described range, separation function layer 15 having little defects can be formed on first porous layer 11 without applying a surfactant to first surface 11a in advance or adding a surfactant to the application liquid. This enables suppression of deterioration of the performance of gas separation membrane 10 due to use of the surfactant.

When the wetting tension of first surface 11a is less than or equal to 52 mN/m, it is possible to suppress excessive permeation of the application liquid into first porous layer 11 when the application liquid is applied to first surface 11a. Therefore, exudation of the application liquid to second surface 11b of first porous layer 11 on a side opposite to first surface 11a can be suppressed to stably maintain a film shape of separation function layer 15 formed on first porous layer 11. This enables suppression of deterioration of non-permeability (barrier property) to other gas components to obtain gas separation membrane 10 having good separation performance.

The wetting tension of first surface 11a may be adjusted by, for example, a material or structure for forming first porous layer 11, or by performing surface activation treatment described later on the surface of first porous layer 11. The first surface 11a is preferably a modified surface hydrophilized by surface activation treatment so that the value of the wetting tension becomes larger than that before the surface activation treatment.

The wetting tension of second surface 11b of first porous layer 11 on a side opposite to first surface 11a is not particularly limited, and may be, for example, greater than or equal to 0 mN/m, greater than or equal to 10 mN/m, or greater than or equal to 20 mN/m. The wetting tension of second surface 11b may be less than or equal to 70 mN/m, less than or equal to 60 mN/m, or less than or equal to 50 mN/m. The wetting tension of second surface 11b may be identical to or different from the wetting tension of first surface 11a. The wetting tension of second surface 11b may be larger or smaller than the wetting tension of first surface 11a.

A moisture absorption rate of first porous layer 11 at a temperature of 30°C and a relative humidity of 75% RH is less than or equal to 0.20 wt%, and may be less than or equal to 0.18 wt%, or less than or equal to 0.16 wt%. The value of the moisture absorption rate is based on dry weight, and can be measured by the method described in examples described later.

When the moisture absorption rate of first porous layer 11 is in the above-described range, it is possible to suppress exudation of a part of separation function layer 15 to second surface 11b of first porous layer 11 on a side opposite to first surface 11a (hereinafter, sometimes referred to as "bleed-through") due to use of gas separation membrane 10. The bleed-through of separation function layer 15 may cause difficulty in stable maintenance of the film shape of separation function layer 15 as defects such as holes are generated in separation function layer 15. Destabilization of the film shape of separation function layer 15 deteriorates non-permeability (barrier property) to other gas components, leading to deterioration of gas separation membrane 10. First porous layer 11 which has first surface 11a with a wetting tension in the above-described range and has a moisture absorption rate in the above-described range may ensure that separation function layer 15 having a good film shape is easily maintained because separation function layer 15 having little defects can be formed on first surface 11a, and bleed-through of separation function layer 15 can be suppressed. This may enable suppression of degradation of gas separation membrane 10 over time to maintain good separation performance.

The moisture absorption rate of first porous layer 11 can be adjusted by, for example, a material or structure for forming first porous layer 11.

It is preferable that first porous layer 11 is formed of a resin material. Examples of the resin material for forming first porous layer 11 include polyolefin resins such as polyethylene (PE) and polypropylene (PP); resins containing fluorine, such as polytetrafluoroethylene (PTFE), polyvinyl fluoride (PVF), and polyvinylidene fluoride (PVDF); polyester resins such as polyethylene terephthalate (PET) and polyethylene naphthalate; polystyrene (PS), polyethersulfone (PES), polyphenylene sulfide (PPS), polysulfone (PSF), polyacrylonitrile (PAN), polyphenylene oxide (PPO), polyamide (PA), polyimide (PI), polyetherimide (PEI), polyetheretherketone (PEEK), high-molecular-weight polyesters, heat-resistant polyamides, aramids, and polycarbonates; and mixtures of two or more of these resin materials. Among them, at least one of a polyolefin-based resin and a resin containing fluorine is preferably contained, and one or more of polyethylene, polypropylene and polytetrafluoroethylene are more preferably contained, from the viewpoint of water repellency and heat resistance.

The maximum pore size of first porous layer 11 which is measured by the bubble point method is preferably less than or equal to 0.2 μm, may be less than or equal to 0.18 μm, less than or equal to 0.15 μm, or less than or equal to 0.1 μm, and is typically greater than or equal to 0.01 μm. The maximum pore size can be measured by a method described in examples described later. When the maximum pore size of first porous layer 11 is in the above-described range, the bleed-through can be suppressed.

The average pore size of first porous layer 11 is preferably less than or equal to 0.1 $\mu$m, may be less than or equal to 0.095 $\mu$m, less than or equal to 0.07 $\mu$m, or less than or equal to 0.05 $\mu$m, and is typically greater than or equal to 0.01 $\mu$m. The average pore size can be measured by a method described in examples described later. When the average pore size of first porous layer 11 is in the above-described range, the bleed-through can be suppressed.

First porous layer 11 is not particularly limited as long as it is a porous material. First porous layer 11 may be, for example, a sheet-shaped porous material such as a porous membrane, a nonwoven fabric, a woven fabric, a foam, a mesh or a net, or a hollow porous material such as a hollow membrane, a tubular membrane or a monolith membrane. First porous layer 11 is preferably a porous membrane from the viewpoint of being suitably used as a support layer of the separation function layer while suppressing resistance to diffusion of a specific gas component. The porous membrane refers to a porous resin film. Examples of the porous membrane include porous membranes obtained by a stretching method, a phase separation method, self-assembly, or crazing.

The thickness of first porous layer 11 can be, for example, greater than or equal to 5 $\mu$m, and may be greater than or equal to 10 $\mu$m, greater than or equal to 15 $\mu$m, or greater than or equal to 25 $\mu$m. The thickness of first porous layer 11 can be, for example, less than or equal to 150 $\mu$m, and may be less than or equal to 120 $\mu$m, less than or equal to 100 $\mu$m, or less than or equal to 80 $\mu$m. The thickness of first porous layer 11 can be measured by a method described in examples described later.

(Separation function layer)

Separation function layer 15 has gas selective permeability in which the layer is selectively permeable to mainly a specific gas component. Separation function layer 15 contains a hydrophilic resin. Separation function layer 15 is a layer of a resin composition containing a hydrophilic resin, and is preferably a gelled in an environment at room temperature (25°C), atmospheric pressure (101.3 kPa) and a relative humidity of 50% RH.

It is preferable that separation function layer 15 contains an alkali metal compound, an amino acid, an aminosulfonic acid and/or an aminophosphonic acid in addition to the hydrophilic resin. Separation function layer 15 may further contain a hydration reaction catalyst for improving the reaction rate between the specific gas component and the alkali metal compound. Since as described above, first surface 11a of first porous layer 11 has the above-described wetting tension, and the wettability of first porous layer 11 to the application liquid for forming separation function layer 15 is adjusted, the application liquid may be free of a surfactant.

The hydrophilic resin is a resin having a hydrophilic group such as a hydroxyl group or an ion exchange group, and is more preferably a crosslinked hydrophilic resin having high water retainability due to a network structure formed by molecular chains of the hydrophilic resin through crosslinking. The hydrophilic group may be in a salt form as a result of being neutralized by an alkali metal compound or the like contained in separation function layer 15.

It is preferable that the polymer forming a hydrophilic resin has a constituent unit derived from, for example, an acrylic acid alkyl ester, a methacrylic acid alkyl ester, a vinyl ester of a fatty acid, or a derivative thereof. Examples of the polymer having hydrophilicity include polymers obtained by polymerizing monomers such as acrylic acid, itaconic acid, crotonic acid, methacrylic acid or vinyl acetate, and specific examples thereof include polyacrylic acid-based resins, polyitaconic acid-based resins, polycrotonic acid-based resins and polymethacrylic acid-based resins each having a carboxyl group as an ion exchange group, polyvinyl alcohol-based resins having a hydroxyl group, and copolymers such as acrylic acid-vinyl alcohol copolymer-based resins, acrylic acid-methacrylic acid copolymer-based resins, acrylic acid-methyl methacrylate copolymer-based resins, and methacrylic acid-methyl methacrylate copolymer-based resins. Among them, polyacrylic acid-based resins which are polymers of acrylic acid, polymethacrylic acid-based resins which are polymers of methacrylic acid, polyvinyl alcohol-based resins obtained by saponifying a polymer of vinyl acetate, acrylate-vinyl alcohol copolymer-based resins obtained by saponifying a copolymer of methyl acrylate and vinyl acetate, and acrylate-methacrylic acid copolymer-based resins which are copolymers of acrylic acid and methacrylic acid are more preferable, and polyacrylic acid and acrylic acid salt-vinyl alcohol copolymer-based resins are still more preferable.

The crosslinked hydrophilic resin may be prepared by reacting a polymer having a hydrophilic group with a crosslinking agent, or may be prepared by copolymerizing a monomer as a raw material for a polymer having a hydrophilic group and a crosslinkable monomer. The crosslinking agent or the crosslinkable monomer is not particularly limited, and a heretofore known crosslinking agent or crosslinkable monomer can be used.

Examples of the crosslinking agent include heretofore known crosslinking agents such epoxy crosslinking agents, polyvalent glycidyl ether, polyhydric alcohols, polyvalent isocyanates, polyvalent aziridines, haloepoxy compounds, polyvalent aldehydes, polyvalent amines, organometallic crosslinking agents, and metallic crosslinking agents. Examples of the crosslinkable monomer include heretofore known crosslinkable monomers such as divinylbenzene, tetraallyloxyethane, diallylamine, diallyl ether, N,N'-methylenebisacrylamide, trimethylolpropane triallyl ether, and pentaerythritol tetraallyl ether. As a crosslinking method, for example, heretofore known techniques can be used such as methods such as thermal crosslinking, ultraviolet crosslinking, electron beam crosslinking, radiation crosslinking and photocrosslinking as well as methods described in Japanese Patent Laying-Open Nos.2003-268009 and 7-88171.

The alkali metal compound can reversibly react with a specific gas component dissolved in separation function layer 15. This enables improvement of selective permeability to a specific gas component in separation function layer 15. Separation function layer 15 may contain one or two or more alkali metal compounds. The alkali metal compound can also neutralize a hydrophilic group of a hydrophilic resin, a carboxy group of an amino acid, a sulfoxyl group of aminosulfonic acid or a phosphoxyl group of aminophosphonic acid to give a salt form.

Examples of the alkali metal compound include alkali metal carbonic acid salts, alkali metal bicarbonic acid salts, and alkali metal hydroxides (described in, for example, WO 2016/024523). Besides, a compound that forms a salt with an acidic compound such as citric acid may be used.

The amino acid, the aminosulfonic acid and the aminophosphonic acid can improve the water retainability of separation function layer 15. It is considered that when used in combination with an alkali metal compound, amino acid, aminosulfonic acid and aminophosphonic acid can improve affinity of separation function layer 15 with a specific gas component that permeates gas separation membrane 10. The carboxy group of the amino acid, the sulfoxyl group of the aminosulfonic acid and the phosphoxyl group of the aminophosphonic acid may be in a salt form as a result of being neutralized by an alkali metal compound, an amine, an ammonium compound or the like contained in separation function layer 15. This enables improvement of selective permeability to a specific gas component in separation function layer 15. Separation function layer 15 may contain one or two or more amino acids, aminosulfonic acids and aminophosphonic acids. The amino acid may have an acidic dissociable group other than a carboxy group. The aminosulfonic acid group may have an acidic dissociable group other than a sulfoxyl group. The aminophosphonic acid group may have an acidic dissociable group other than an aminophosphonic group. These acidic dissociable groups may be in a salt form as a result of being neutralized by an alkali metal compound, an amine, an ammonium compound or the like. The acidic dissociable group as used herein is, for example, a phenolic hydroxyl group, or a hydroxamic acid group (N-hydroxycarboxylic acid amide).

The amino acid, aminosulfonic acid and aminophosphonic acid are not particularly limited. As the amino acid, aminosulfonic acid and aminophosphonic acid, for example, at least one selected from the group consisting of glycine, N,N-dimethylglycine, alanine, serine, proline, taurine, diaminopropionic acid, 2-aminopropionic acid, 2-aminoisobutyric acid, 3,4-dihydroxyphenylalanine, sarcosine, 3-(methylamino)propionic acid, N-(2-aminoethyl)glycine, N-(3-aminopropyl)glycine, N-(4-cyanophenyl)glycine, dimethylglycine, hippuric acid, 4-aminohippuric acid, N-(4-hydroxyphenyl)glycine, hydantoic acid, iminodiacetic acid, iminodipropionic acid, N-isovalerylglycine, phenaceturic acid, N-tigloylglycine, aceturic acid, alanylglycylglycine, benzoylglycylglycine, ethylenediamine diacetic acid, ethylenediamine dipropionic acid, 2-allylglycine, N-β-alanylglycine, N-acetyl-β-alanine, arginine, asparagine, aspartic acid, cysteine, glutamine, glutamic acid, histidine, isoleucine, leucine, lysine, methionine, phenylalanine, threonine, tryptophan, tyrosine, valine, ornithine, citrulline, cystine, pipecolinic acid and salts thereof is preferable. As the amino acid, the aminosulfonic acid and the aminophosphonic acid, at least one selected from the group consisting of glycine, N,N-dimethylglycine, alanine, serine, proline, taurine, diaminopropionic acid, 2-aminopropionic acid, 2-aminoisobutyric acid, 3,4-dihydroxyphenylalanine, sarcosine, iminodiacetic acid and salts thereof is preferable.

When the specific gas component is an acidic gas, examples of the hydration reaction catalyst include oxo acid compounds. The oxo acid compound is preferably at least one elemental oxo acid compound selected from the group consisting of group 14 elements, group 15 elements, and group 16 elements, more preferably at least one selected from the group consisting of a tellurious acid compound, a selenious acid compound, an arsenious acid compound, and an orthosilicic acid compound. Separation function layer 15 can contain one or two or more oxo acid compounds.

The thickness of separation function layer 15 can be, for example, less than or equal to 600 $\mu$m, and may be less than or equal to 400 $\mu$m, less than or equal to 200 $\mu$m, or less than or equal to 100 $\mu$m. The thickness of separation function layer 15 can be typically greater than or equal to 0.01 $\mu$m, and may be greater than or equal to 0.1 $\mu$m, or greater than or equal to 1 $\mu$m. The thickness of separation function layer 15 can be measured by a method described in examples described later.

The moisture absorption rate of separation function layer 15 on a dry weight basis at a temperature of 30°C and a relative humidity of 75% RH is preferably greater than or equal to 3 wt%, more preferably greater than or equal to 5 wt%, still more preferably greater than or equal to 10 wt%. The moisture absorption rate can be determined by the following measurement procedure using a commercially available moisture absorption and desorption measurement apparatus such as "IGASORP" (manufactured by Nihon SiberHegner K.K.).

[Measurement procedure]

(1) The components of the separation function layer are dried and the dry weight thereof is measured.

(2) Thereafter, moisture is adsorbed in nitrogen gas at a relative humidity of 75% RH until equilibrium is reached, and the weight after moisture absorption is measured.
(3) The moisture absorption rate is determined from the following formula.

$$\text{Moisture absorption rate [wt\%]} = \{(\text{weight after moisture absorption - dry weight})/\text{dry weight}\} \times 100$$

(Second porous layer)

Second porous layer 12 is provided on separation function layer 15 on a side opposite to first porous layer 11. Second porous layer 12 can be used as a protective layer for protecting separation function layer 15. Second porous layer 12 can be in directly contact with separation function layer 15. Second porous layer 12 has porosity with high gas permeability so as not to be resistant to diffusion of a source gas supplied to separation function layer 15 or a specific gas component contained in the source gas in gas separation membrane 10.

Second porous layer 12 can have a third surface 12a that is in directly contact with separation function layer 15. The wetting tension of third surface 12a may be, for example, in the same range as that of the wetting tension of first surface 11a of first porous layer 11. The wetting tension of third surface 12a may be identical to or different from the wetting tension of first surface 1 1a of first porous layer 11. A wetting tension of third surface 12a is preferably greater than or equal to 38 mN/m, and may be greater than or equal to 40 mN/m, or greater than or equal to 42 mN/m. The wetting tension of third surface 12a is less than or equal to 73 mN/m, and may be less than or equal to 70 mN/m, or less than or equal to 65 mN/m. The wetting tension of third surface 12a can be measured in the same manner as in a method for the wetting tension of first surface 11a described in examples described later.

By adjusting the wetting tension of third surface 12a as described above, the third surface can be well brought into close contact with separation function layer 15.

The wetting tension of third surface 12a may be adjusted by, for example, a material or structure for forming second porous layer 12, or by performing surface activation treatment on the surface of second porous layer 12. The third surface 12a is preferably a modified surface hydrophilized by surface activation treatment so that the value of the wetting tension becomes larger than that before the surface activation treatment.

The wetting tension of a fourth surface 12b is not particularly limited, and may be in the same range as that of the wetting tension of second surface 11b of first porous layer 11.

The moisture absorption rate at a temperature of 30°C and a relative humidity of 75% RH, the maximum pore size and the average pore size measured by the bubble point method for second porous layer 12 may be in the same range as that of the moisture absorption rate of first porous layer 11, the maximum pore size and the average pore size measured by the bubble point method for first porous layer. The thickness of second porous layer 12 may be in the same range as that of the thickness of first porous layer 11.

It is preferable that second porous layer 12 is formed of a resin material or an inorganic material. Examples of the resin material for forming second porous layer 12 include the resin materials described for first porous layer 11. Examples of the inorganic material for forming second porous layer 12 include metals, glass, and ceramics. Second porous layer 12 may contain both a resin material and an inorganic material. Second porous layer 12 is not particularly limited as long as it is a porous material, and second porous layer 12 may be in the form of, for example, a porous membrane, a nonwoven fabric, a woven fabric, a foam or a net, with a porous membrane being preferable.

(Third porous layer and fourth porous layer)

The third porous layer is provided on first porous layer 11 on a side opposite to separation function layer 15. The third porous layer can be used as a reinforcing layer for reinforcing the function of first porous layer 11 as a support layer. The fourth porous layer is provided on second porous layer 12 on a side opposite to separation function layer 15. The fourth porous layer can be used as a reinforcing layer for reinforcing the function of second porous layer 12 as a protective layer.

When the third porous layer and/or the fourth porous layer are provided, it is possible to additionally impart strength which ensures that a pressure load applied to gas separation membrane 10 can be withstood during selective permeation of a specific gas component in the source gas.

It is preferable that the third porous layer and the fourth porous layer are each independently formed of a resin material or an inorganic material. Examples of the resin material or the inorganic material for forming the third porous layer and the fourth porous layer include those described as the resin material or the inorganic material for forming second porous layer 12.

The third porous layer and the fourth porous layer may be each independently in the form of a porous membrane, a nonwoven fabric, a woven fabric, a foam or a net, with a nonwoven fabric being preferable. Examples of the nonwoven fabric include spunbonded nonwoven fabrics, melt-blown nonwoven fabrics, air-laid nonwoven fabrics, spunlace nonwoven fabrics, and card nonwoven fabrics.

(Method (1) for manufacturing gas separation membrane)

Method (1) for manufacturing a gas separation membrane is a method for manufacturing gas separation membrane 10 in which the wetting tension of first surface 11a of first porous layer 11 is in the above-described range. Method (1) includes the steps of: performing surface activation treatment on first porous layer 11 to adjust the wetting tension of first surface 11a to greater than or equal to 38 mN/m and less than or equal to 52 mN/m (hereinafter, sometimes referred to as a "surface treatment step"); and applying an application liquid containing a hydrophilic resin for forming separation function layer 15 to first surface 11a (hereinafter, sometimes referred to as "application step (1)"). Method (1) for manufacturing a gas separation membrane may further include the step of laminating second porous layer 12 on the coating film formed by the application liquid applied to first surface 11a (hereinafter, sometimes referred to as a "lamination step (1)").

The surface treatment step is carried out for the wetting tension of first surface 11a of first porous layer 11 to fall within the above-described range. The surface activation treatment performed in the surface treatment step is not particularly limited as long as the treatment enables the wetting tension of first surface 1 1a to fall within the above-described range. Examples of the surface activation treatment include one or more selected from the group consisting of discharge treatments such as corona treatment, plasma treatment and glow discharge; ionizing actinic ray treatments such as ultraviolet irradiation treatment and electron beam irradiation treatment; and ozone treatment. The surface activation treatment is preferably at least one of corona treatment and plasma treatment.

In method (1) for manufacturing a gas separation membrane, first surface 11a can be inhibited from repelling an application liquid when the application liquid is applied to first surface 1 1a in application step (1) because the wetting tension of first surface 1 1a of first porous layer 11 is in the above-described range. This facilitates formation of separation function layer 15 having little defects such as holes on first porous layer 11.

When the surface treatment step is corona treatment, the amount of corona treatment may be selected according to the wetting tension of first surface 11a of first porous layer 11 before the surface activation treatment. The amount of corona treatment may be, for example, greater than or equal to 15 W·min/m$^2$, greater than or equal to 30 W·min/m$^2$, greater than or equal to 60 W·min/m$^2$, greater than or equal to 90 W·min/m$^2$, greater than or equal to 125 W·min/m$^2$, greater than or equal to 160 W·min/m$^2$, or greater than or equal to 195 W·min/m$^2$. The amount of corona treatment may be, for example, less than or equal to 3000 W·min/m$^2$, less than or equal to 2000 W·min/m$^2$, less than or equal to 1500 W·min/m$^2$, less than or equal to 1000 W·min/m$^2$, less than or equal to 800 W·min/m$^2$, less than or equal to 750 W·min/m$^2$, or less than or equal to 700 W·min/m$^2$.

The amount of corona treatment can be adjusted by adjusting a discharge power of corona treatment, a treatment speed (relative moving speed of a discharge portion to the first porous layer), the number of times of passing (the number of corona treatments performed at the discharge power and the treatment speed), a treatment electrode width, and the like. The discharge power of the corona treatment can be adjusted within the range of, for example, greater than or equal to 10 W and less than or equal to 5000 W. The treatment speed of the corona treatment can be adjusted within the range of, for example, greater than or equal to 0.1 m/min and less than or equal to 400 m/min. The number of times of passing is not particularly limited as long as it is greater than or equal to 1.

The application liquid to be used in application step (1) can contain a medium, an alkali metal compound, an amino acid, an aminosulfonic acid, an aminophosphonic acid and/or a hydration reaction catalyst in addition to the hydrophilic resin. Examples of the medium include protic polar solvents such as water, and alcohols (such as methanol, ethanol, 1-propanol, and 2-propanol); nonpolar solvents such as toluene, xylene, and hexane; and aprotic polar solvents such as ketones (such as acetone, methyl ethyl ketone, and methyl isobutyl ketone), N-methylpyrrolidone, N,N-dimethylacetamide, and N,N-dimethylformamide. A single kind of medium may be used alone, or greater than or equal to two kinds of media may be used in combination as long as they are compatible with each other. Among these, a medium containing at least one selected from the group consisting of water and alcohols (such as methanol, ethanol, 1-propanol, and 2-propanol) is preferable, and a medium containing water is more preferable. Examples of the alkali metal compound, amino acid, aminosulfonic acid, aminophosphonic acid and hydration reaction catalyst contained in the application liquid include those described above.

The application liquid can be provided by, for example, mixing a hydrophilic resin for forming separation function layer 15 and a medium. The application liquid can further contain the above-described alkali metal compound, amino acid, aminosulfonic acid, aminophosphonic acid and/or hydration reaction catalyst, etc. The application liquid is preferably free of a surfactant.

After the hydrophilic resin, the medium, the alkali metal compound, the amino acid, the aminosulfonic acid, the aminophosphonic acid and/or the hydration reaction catalyst, etc. are mixed, the application liquid may be subjected to defoaming treatment for removing bubbles contained in the mixed liquid. Examples of the defoaming treatment include a method in which shear is applied by, for example, stirring or filtering the mixed liquid; a method in which the mixed liquid is degassed in vacuum or degassed under reduced pressure; and a method in which the mixed liquid is degassed by performing heating.

Application step (1) is a step of applying an application liquid to first surface 11a having the above-described wetting tension with surface activation treatment performed on first porous layer 11. The application step can be carried out by a slot die method, a spin coating, a bar coating, a die coating method, a blade coating method, an air-knife coating method, a gravure coating method, a roll coating method, a spray coating method, a dip coating method, a comma roll method, a kiss coating method, screen printing, inkjet printing or the like.

Application step (1) may include a step of removing a medium from a coating film formed by applying the application liquid onto first porous layer 11. Examples of the step of removing a medium include a process in which the medium is evaporated and removed from the coating film by heating or the like.

Lamination step (1) is a step of laminating second porous layer 12 on the coating film formed in application step (1). In lamination step (1), a step of further removing the medium in the coating film by heating or the like may be carried out after second porous layer 12 is laminated.

(Method (2) for manufacturing gas separation membrane)

Gas separation membrane 10 manufactured by method (2) is selectively permeable to a specific gas component, and includes first porous layer 11 and gel-like separation function layer 15 containing a hydrophilic resin. Method (2) includes the steps of: performing corona treatment on at least one surface of first porous layer 11 at an amount of treatment of greater than or equal to 90 W·min/m$^2$ and less than or equal to 800 W min/m$^2$ (hereinafter, sometimes referred to as a "corona treatment step); and applying an application liquid containing a hydrophilic resin to the corona-treated surface of first porous layer 11 (hereinafter, sometimes referred to as "application step (2)"). First porous layer 11 is a sheet-shaped or hollow resin porous material. The resin porous material contains one or more of polyethylene, polypropylene and polytetrafluoroethylene. Method (2) for manufacturing a gas separation membrane may further include the step of laminating second porous layer 12 on the coating film formed by the application liquid applied to the corona-treated surface (hereinafter, sometimes referred to as a "lamination step (2)").

The amount of corona treatment in the corona treatment step is greater than or equal to 90 W·min/m$^2$, and may be greater than or equal to 125 W·min/m$^2$, greater than or equal to 160 W·min/m$^2$, or greater than or equal to 195 W·min/m$^2$. The amount of corona treatment in the corona treatment step is typically less than or equal to 800 W·min/m$^2$, and may be greater than or equal to 750 W·min/m$^2$, or greater than or equal to 700 W·min/m$^2$.

The amount of corona treatment can be adjusted by adjusting a discharge power of corona treatment, a treatment speed, the number of times of passing, and the like. The discharge power, the processing speed and the number of times of passing in the corona treatment can be, for example, in the ranges described above.

The average pore size of first porous layer 11 present in gas separation membrane 10 is preferably less than or equal to 0.1 μm, and may be in the range described above as a preferred range. The moisture absorption rate of first porous layer 11 after the corona treatment step is preferably in the above-described range. The maximum pore size of first porous layer 11 which is measured by the bubble point method is preferably in the above-described range.

It is preferable that the corona treatment step is carried out so that the wetting tension of the corona-treated surface of first porous layer 11 is greater than or equal to 38 mN/m and less than or equal to 52 mN/m or less. When the wetting tension of the surface of first porous layer 11 which is subjected to corona treatment is in the above-described range and the amount of corona treatment is in the above-described range, the wetting tension of the corona-treated surface of first porous layer 11 can be easily adjusted to be within the above-described range.

In method (2) for manufacturing a gas separation membrane, the corona-treated surface can be inhibited from repelling an application liquid when the application liquid is applied to the corona-treated surface in application step (2) because the wetting tension of first surface 1 1a of first porous layer 11 is in the above-described range. This facilitates formation of separation function layer 15 having little defects such as holes on first porous layer 11.

Application step (2) can be carried out in the same procedure as in the above-described application step (1). The application liquid to be used in application step (2) can be prepared in the same procedure as in the above-described application step (1). Lamination step (2) can be carried out in the same procedure as in the above-described lamination step (1).

(Separation membrane element)

The separation membrane element is intended for separation of a specific gas component from a source gas containing the specific gas component. The separation membrane element includes gas separation membrane 10, a feed-side space for feeding a source gas to gas separation membrane 10;
a permeation-side space for a permeate gas that has permeated gas separation membrane 10; and a sealing portion for preventing mixing of the source gas in the feed-side space and the permeate gas in the permeation-side space.

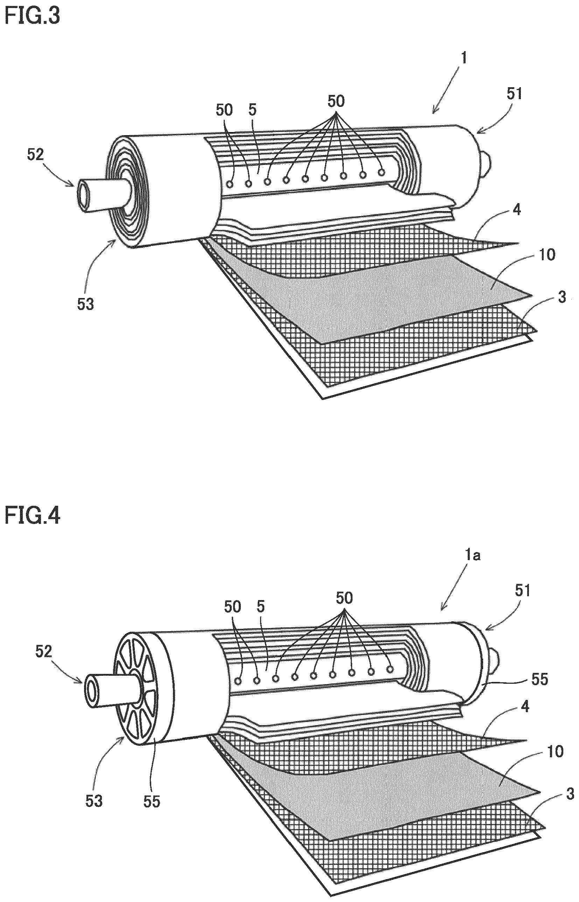

The separation membrane element may be of spiral-wound type, flat membrane type, hollow fiber type, tube type, pleat type, plate-and-frame type, or the like. In the following description, spiral-wound type separation membrane elements 1 and 1a shown in Figs. 3 and 4 are given as an example. Figs. 3 and 4 are schematic perspective views showing an example of a separation membrane element according to the present embodiment, in which a partially cutout portion is provided.

As shown in Figs. 3 and 4, separation membrane element 1, 1a may include:

a feed-side flow path member 3 that forms a flow path through which a source gas containing a specific gas component flows;
gas separation membrane 10 in which the specific gas component contained in the source gas flowing in feed-side flow path member 3 is selectively separated to permeate the gas separation membrane;
a permeation-side flow path member 4 that forms a flow path through which a permeate gas containing the specific gas component, which has permeated gas separation membrane 10, flows;
a sealing portion for preventing mixing of the source gas with the permeate gas; and
a central tube 5 for collecting the permeate gas flowing through permeation-side flow path member 4,
the separation membrane element including a wound body in which a multilayer body for an element is wound around central tube 5, the multilayer body being such that at least one feed-side flow path member 3, at least one gas separation membrane 10 and at least one permeation-side flow path member 4 are laminated. The wound body may have any shape such as a cylindrical shape or a rectangular cylindrical shape. Central tube 5 has a plurality of holes 50 in the outer peripheral surface of central tube 5. Holes 50 communicate between the flow path space for the permeate gas formed by permeation-side flow path member 4 and an inner hollow space of central tube 5.

Spiral-wound type separation membrane element 1, 1a may further include a fixing member such as an outer peripheral tape or an anti-telescope device 55 shown in Fig. 4 in order to prevent the wound body from being rewound or collapsed in its winding. In order to secure a strength against a load due to internal pressure and external pressure on the separation membrane element, an outer wrap (reinforcing layer) may be provided on the outermost periphery of the wound body.

The specific gas component contained in the source gas is preferably an acidic gas. Examples of the acidic gas include those described above. Examples of the gas component contained in the source gas, other than the specific gas component include hydrogen, hydrocarbons such as methane and ethylene, nitrogen, and carbon monoxide. It is preferable that the source gas contains carbon dioxide and/or hydrogen sulfide as a specific gas component, and hydrogen, hydrocarbon and/or nitrogen as a gas component other than the specific gas component.

Feed-side flow path member 3 and permeation-side flow path member 4 preferably have a function of promoting the turbulent flows (surface renewal of the membrane surface) of the source gas and permeate gas that has permeated gas separation membrane 10 to increase the membrane permeation rate of the permeate gas in the source gas, and a function of reducing the pressure losses of the source gas to be fed and permeate gas that has permeated gas separation membrane 10 as much as possible. Since it is preferable that feed-side flow path member 3 and permeation-side flow path member 4 preferably have a function of generating turbulent flow in the source gas and the permeate gas, in addition to a function as a spacer for forming a flow path for the source gas and the permeate gas, those having a network shape (net shape, mesh shape, and the like) are suitably used. Depending on the network shape, the flow path for the gas changes. Therefore, the shape of the unit cell of the network is preferably selected according to the purpose, for example, from shapes such as a square, a rectangle, a rhombus, and a parallelogram. Materials of feed-side flow path member 3 and permeation-side flow path member 4 are not particularly limited. The materials preferably have heat resistance capable of enduring the operating temperature conditions of a separation device in which gas separation membrane element 1, 1a is provided.

A sealing part is provided to prevent the mixing of the source gas with the permeate gas. For example, a sealing material penetrates into permeation-side flow path member 4 and gas separation membrane 10, and is cured, whereby the sealing part can be formed. The sealing part can be generally provided at end parts located at both ends in a direction parallel to the axis of central tube 5 of the wound body, and at the end part in which a distance between central tube 5 and the end part is long among end parts located at both ends in a direction orthogonal to the axis of central tube 5 so as to have a so-called envelope shape. A material generally used as an adhesive agent can be used for the sealing part. For example, an epoxy resin and the like can be used.

Central tube 5 is a conduit for collecting the permeate gas that has permeated gas separation membrane 10 and discharging the same from separation membrane element 1, 1a. Central tube 5 is preferably made of a material that has heat resistance capable of enduring the operating temperature conditions of separation device in which separation membrane element 1, 1a is provided and a mechanical strength capable of enduring the rolling of the multilayer body for an element.

(Separation membrane module)

The separation membrane element can be used for a separation membrane module. The separation membrane module has one or more separation membrane elements. The separation membrane module includes a source gas feeding port (portion communicating with a feed-side end part 51 shown in Figs. 3 and 4) communicating with a flow path formed by feed-side flow path member 3 of the separation membrane element, a retentate gas discharge port (portion communicating with a discharge-side end part 53 shown in Figs. 3 and 4), and a permeate gas discharge port (portion communicating with a discharge port 52 shown in Figs. 3 and 4) communicating with a flow path formed by permeation-side flow path member 4 of the separation membrane element. In the separation membrane module, the source gas is fed to gas separation membrane 10 through the source gas feeding port, the permeate gas that has permeated gas separation membrane 10 is discharged through the permeate gas discharge port, and the source gas that has not permeated gas separation membrane 10 is discharged through the retentate gas discharge port. The source gas feeding port, the retentate gas discharge port, and the permeate gas discharge port may be provided in the main body of the separation membrane element, or provided in a container for storing the separation membrane element (hereinafter, referred to as a "housing").

The housing can form a space for sealing the source gas flowing in the separation membrane module. The housing may include, for example, a cylindrical member made of stainless steel and the like, and a blocking member for blocking both the axial ends of the cylindrical member. The housing may have any shape such as a cylindrical shape or a rectangular cylindrical shape. It is preferable that the housing has a cylindrical shape because separation membrane element usually has a cylindrical shape. A partition can be provided in the housing to prevent the mixing of the source gas fed to feed-side end part 51 with the retentate gas that has not permeated gas separation membrane 10 provided in the separation membrane element.

When two or more separation membrane elements are disposed in the housing, the source gases fed to respective separation membrane elements may be fed in parallel or in series. Here, feeding source gases in parallel means that at least the source gases are distributed and introduced into a plurality of separation membrane elements. Feeding source gases in series means that at least a permeate gas and/or a retentate gas discharged from upstream gas separation membrane element are/is introduced into downstream separation membrane element.

(Gas separation device)

The gas separation device may include a feed-side space and a permeation-side space separated from each other by gas separation membrane 10, a feed-side inlet for feeding a source gas containing at least a specific gas component from a feeding part to the feed-side space, a permeation-side outlet for discharging a permeate gas containing a specific gas component, which has permeated gas separation membrane 10, from the permeation-side space, and a retentate-side outlet for discharging a source gas that has not permeated gas separation membrane 10 from the feed-side space.

The gas separation device can include at least one separation membrane module including a separation membrane element including gas separation membrane 10 described above. The arrangement and number of gas separation membrane modules in the gas separation device can be selected according to the required throughput, the recovery rate of a specific gas component, the size of the place to install the separation device, and the like.

(Gas separation method)

The gas separation method is a method for separating a specific gas component by bringing a source gas containing at least a specific gas component into contact with gas separation membrane 10. Examples of the method for bringing a source gas into contact with gas separation membrane 10 include a method using a gas separation device including a separation membrane module.

The gas separation method may be carried out by a method in which the pressure of the source gas fed to the feed-side of gas separation membrane 10 is increased by a compressor or the like to make the feed-side gas partial pressure higher than the permeation-side (side of gas separation membrane 10 on which the permeate gas is discharged) gas partial pressure; a method in which the permeation-side of gas separation membrane 10 is brought into a reduced-pressure state to make the feed-side gas partial pressure higher than the permeation-side gas partial pressure ("pressure reduction method"); a method in which a sweep gas to be discharged together with the permeate gas is fed to the permeation side of gas separation membrane 10 to increase the amount of the permeate gas (sweep method); and a combination of two or more of these methods.

It is preferable that gas separation membrane 10 for use in the gas separation method is incorporated in a separation membrane element or a separation membrane module when used.

EXAMPLES

Hereinafter, the present invention will be more specifically described with reference to Examples and Comparative Examples; however, the present invention is not intended to be limited thereto.

[Measurement of wetting tension]

The wetting tension [mN/m] of the first surface and the second surface of the first porous layer was measured in accordance with JIS K6768: 1999. The wetting tension was measured after corona treatment was performed under the conditions of each example and each comparative example.

[Measurement of moisture absorption rate]

The moisture absorption rate [wt%] (dry weight basis) of the first porous layer was measured in accordance with the following procedure. First, a first porous layer subjected to corona treatment under the conditions of each example and each comparative example was provided. When the first porous layer was laminated with another porous layer (e.g. third porous layer), only the first porous layer was subjected to the measurement after being peeled off. Next, the weight (dry weight) of the first porous layer dried by allowing a nitrogen gas at a temperature of 60°C and a relative humidity of 0% RH to flow was measured with a moisture absorption and desorption measurement apparatus (trade name: "IGASORP" manufactured by Nihon SiberHegner K.K.). Subsequently, using the moisture absorption and desorption measurement apparatus, moisture was adsorbed in a nitrogen gas at a temperature of 30°C and a relative humidity of 75% RH until the weight of the first porous layer reached equilibrium, and the weight (weight after moisture absorption) of the first porous layer was then measured. The maximum holding time until the weight of the first porous layer reached equilibrium was 480 minutes. The moisture absorption rate was determined on the basis of the measured dry weight and weight after moisture absorption.

$$\text{Moisture absorption rate [wt\%]} = \{(\text{weight after moisture absorption - dry weight})/\text{dry weight}\} \times 100$$

[Measurement of maximum pore size and average pore size by bubble point method]

The maximum pore size [$\mu$m] and the average pore diameter [$\mu$m] of the first porous layer were measured by the bubble point method using Perm Porometer (model: CFP-1500 AXLC (500 PSI type) manufactured by PMI) and a test liquid (trade name "GalWick" (manufactured by PMI)). This measurement was performed on the first porous layer subjected to corona treatment.
In this measurement, the first porous layer immersed in the test liquid and sufficiently degassed was used as a measurement sample. For this measurement sample, a change in flow rate (wetting flow rate) with the pressure continuously changed from 100 kPa to 2200 kPa was measured.
At the initial pressure, the flow rate is 0 (zero) because a liquid film covering the first porous layer of the measurement sample is not broken. When the pressure is increased, the liquid film of the largest hole is broken, so that the flow rate rises (bubble point). When the pressure is further increased after the bubble point is detected, the flow rate increases depending on each pressure. The flow rate at a pressure at which the liquid film of the smallest pore is broken coincides with the flow rate in the dry first porous layer (dry flow rate). Where P [Pa] is a pressure at which the liquid film of the measurement sample is broken and r [N/m] is a surface tension of the test liquid, the pore size d [$\mu$m] of the liquid film broken by pressure P satisfies the relationship of the following expression (i).

$$d = C \cdot r/P \quad \text{(i)}$$

wherein C is a constant determined by the wetting tension of the test liquid, the contact angle and the like.
On the basis of the equation (i) above, the pore size of the liquid film broken by the pressure at detection of a bubble point was calculated as a maximum pore size measured by the bubble point method. A pressure at which the cumulative filter flow [%], which is a value obtained by dividing the wetting flow rate at a certain pressure measured as described above by the dry flow rate of the pressure, is 50% was calculated, and a pore size of the liquid film broken at the calculated pressure was determined on the basis of the expression (i), and taken as an average pore size [μm].

[Measurement of thickness]

The thickness of the first porous layer, the second porous layer and the gas separation membrane (total thickness of first porous layer, separation function layer and second porous layer) was measured immediately after drying using a gauge (547-401 thickness gauge manufactured by Mitutoyo Corporation). The thickness of the separation function layer was calculated by subtracting the thicknesses of the first porous layer and the second porous layer from the thickness of the gas separation membrane.

[Evaluation of permeability performance]

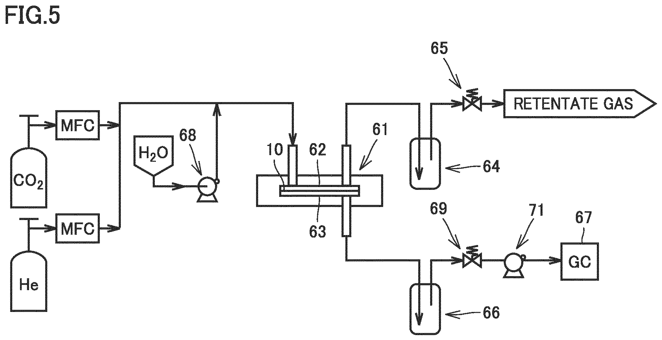

The He permeance of the gas separation membrane 10 was measured using a gas separation device including a gas separation membrane cell 61 shown in Fig. 5. Specifically, the produced gas separation membrane was cut into a piece of an appropriate size to form a flat membrane, and fixed between a feed-side chamber 62 and a permeation-side chamber 63 of stainless steel gas separation membrane cell 61 in such a manner that the first porous layer of gas separation membrane 10 was on the permeation side. The temperature of the gas separation membrane cell was set to 90°C with a thermostatic bath. Source gases ($CO_2$: 25.2 vol%, He: 19.1 vol%, $H_2O$: 55.7 vol%) were fed to feed-side chamber 62 of gas separation membrane cell 61 at a flow rate of 275.0 NmL/min. Here, water was sent by a metered liquid feed pump 68, heated and evaporated to adjust $H_2O$ to the above mixing ratio. The pressure of the feed-side chamber 62 was adjusted to 108 kPaA (absolute pressure) by a back pressure regulator 65 provided on the downstream side of a cooling trap 64 in the middle of a retentate gas discharge path. A back pressure regulator 69 and a decompression pump 71 were also provided between a cooling trap 66 and a gas chromatograph 67, thereby adjusting the pressure of permeation-side chamber 63 to 45 kPaA.

Three hours after the start of operation of the gas separation device, the permeate gas after water vapor contained in the permeate gas discharged from permeation-side chamber 63 was removed by cooling trap 66 was analyzed by gas chromatograph 67, and the He permeance (mol/($m^2 \times sec \times kPa$)) was calculated to evaluate the barrier property (non-permeability) of gas separation membrane 10 to He. Grade "A" was assigned when the He permeance was less than $2 \times 10^{-7}$ mol/($m^2 \times sec \times kPa$), and grade "B" was assigned when He permeance was greater than or equal to $2 \times 10^{-7}$ mol/($m^2 \times sec \times kPa$).

[Evaluation of bleed-through]

For a gas separation membrane rated "A" in [Evaluation of permeability performance] above, operations of the gas separation device as in the evaluation of permeability performance were continuously carried out for 20 hours, gas separation membrane 10 was then taken out from gas separation membrane cell 61, and the permeation-side surface of gas separation membrane 10 was illuminated, and visually observed. When a part of the separation function layer exuded to the permeation-side surface of the first porous layer of the gas separation membrane, so that the surface turned transparent, it was determined that bleed-through occurred and it was evaluated that bleed-through was "present", and when the surface did not turn transparent, it was determined that bleed-through did not occur and it was evaluated that there was "no" bleed-through.

[Example 1]

(Provision of first porous layer (1) and second porous layer (1))

A polypropylene (PP) porous membrane (Celgard (registered trademark) 2500) manufactured by Polypore, Inc.) was provided as each of the first porous layer (1) and the second porous layer (1). Using a corona surface modification evaluation apparatus (TEC-4AX manufactured by KASUGA DENKI, INC., treatment electrode width: 21 cm), one surface of each of the first porous layer (1) and the second porous layer (1) was subjected to corona treatment under a treatment condition (1) shown in Table 1. The discharge power in the treatment condition is a power in a discharge portion of the corona surface modification evaluation apparatus, the treatment speed is a relative movement speed of the discharge portion to the first porous layer, and the number of times of passing is the number of corona treatments performed at the discharge power and the treatment speed. The wetting tension of the corona-treated surface of the first porous layer (1) and the moisture absorption rate of the first porous layer (1) were measured, and the maximum pore size and the average pore size were measured by the bubble point method. The results are shown in Table 2.

(Preparation of application liquid (1))

152.75 parts by weight of water, 0.73 parts by weight of non-crosslinked polyacrylic acid (PAA) (AQUPAANA "AP-40F) manufactured by Sumitomo Seika Chemicals Company, Limited) and 3.67 parts by weight of crosslinked polyacrylic acid (AQUPEC "HV -501E" manufactured by Sumitomo Seika Chemicals Company, Limited) as hydrophilic resins, 34.84 parts by weight of a 50 wt% cesium hydroxide aqueous solution (manufactured by Sigma-Ardrich) as an alkali metal, and 8.01 parts by weight of sarcosine (manufactured by Tokyo Chemical Industry Co., Ltd.) as an amino acid were added, and mixed to obtain a mixed liquid. The obtained mixed liquid was defoamed with a defoaming device ("rotation and revolution mixer AWATORI-RENTARO ARE-310" manufactured by THINKY) to obtain an application liquid (1).

(Production of gas separation membrane (1))

Application liquid (1) was applied to the corona-treated surface of first porous layer (1) with a tabletop applicator in such a manner that the thickness of separation function layer (1) immediately after drying was 50 $\mu$m, thereby forming a coating film. Subsequently, a second porous layer (1) was laminated on the coating film on first porous layer (1) with the coating film opposed to the corona-treated surface side of second porous layer (1). Thereafter, drying was performed at 100°C for 30 minutes to form a separation function layer (1), thereby obtaining a gas separation membrane (1). Using gas separation membrane (1), evaluation of permeability performance and evaluation of bleed-through were performed. The results are shown in Table 2.

[Example 2]

(Provision of first porous layer (2) and second porous layer (2))

Except that the treatment condition for corona treatment was changed to a treatment condition (2) shown in Table 1, the same procedure as in Example 1 was carried out to provide a first porous layer (2) and a second porous layer (2). The wetting tension of the corona-treated surface of first porous layer (2) and the moisture absorption rate of first porous layer (2) were measured, and the maximum pore size and the average pore size were measured by the bubble point method. The results are shown in Table 2.

(Production of gas separation membrane (2))

Except that first porous layer (2) and second porous layer (2) were used in place of first porous layer (1) and second porous layer (1), the same procedure as in Example 1 was carried out to produce a gas separation membrane (2) including a separation function layer (2). Using gas separation membrane (2), evaluation of permeability performance and evaluation of bleed-through were performed. The results are shown in Table 2.

[Example 3]

(Provision of first porous layer (3) and second porous layer (3))

Except that the treatment condition for corona treatment was changed to a treatment condition (3) shown in Table 1, the same procedure as in Example 1 was carried out to provide a first porous layer (3) and a second porous layer (3). The wetting tension of the corona-treated surface of first porous layer (3) and the moisture absorption rate of first porous layer (3) were measured, and the maximum pore size and the average pore size were measured by the bubble point method. The results are shown in Table 2.

(Production of gas separation membrane (3))

Except that first porous layer (3) and second porous layer (3) were used in place of first porous layer (1) and second porous layer (1), the same procedure as in Example 1 was carried out to produce a gas separation membrane (3) including a separation function layer (3). Using gas separation membrane (3), evaluation of permeability performance and evaluation of bleed-through were performed. The results are shown in Table 2.

[Example 4]

(Provision of first porous layer (4) and second porous layer (4))

Except that the treatment condition for corona treatment was changed to a treatment condition (4) shown in Table 1, the same procedure as in Example 1 was carried out to provide a first porous layer (4) and a second porous layer (4). The wetting tension of the corona-treated surface of first porous layer (4) and the moisture absorption rate of first porous layer (4) were measured, and the maximum pore size and the average pore size were measured by the bubble point method. The results are shown in Table 2.

(Production of gas separation membrane (4))

Except that first porous layer (4) and second porous layer (4) were used in place of first porous layer (1) and second porous layer (1), the same procedure as in Example 1 was carried out to produce a gas separation membrane (4) including a separation function layer (4). Using gas separation membrane (4), evaluation of permeability performance and evaluation of bleed-through were performed. The results are shown in Table 2.

[Example 5]

(Provision of first porous layer (5) and second porous layer (5))

A PP porous membrane (Microporous Film CMZ-05076) manufactured by 3M Company) was provided as each of a first porous layer (5) and a second porous layer (5). Using a corona surface modification evaluation apparatus (TEC-4AX manufactured by KASUGA DENKI, INC.), one surface of each of the first porous layer (5) and the second porous layer (5) was subjected to corona treatment under a treatment condition (5) shown in Table 1. The wetting tension of the corona-treated surface of first porous layer (5) and the moisture absorption rate of first porous layer (5) were measured, and the maximum pore size and the average pore size were measured by the bubble point method. The results are shown in Table 2.

(Production of gas separation membrane (5))

Except that first porous layer (5) and second porous layer (5) were used in place of first porous layer (1) and second porous layer (1), the same procedure as in Example 1 was carried out to produce a gas separation membrane (5) including a separation function layer (5). Using gas separation membrane (5), evaluation of permeability performance and evaluation of bleed-through were performed. The results are shown in Table 2.

[Example 6]

(Preparation of application liquid (2))

178.81 parts by weight of water, 0.73 parts by weight of non-crosslinked polyacrylic acid (PAA) (AQUPAANA "AP-40F) manufactured by Sumitomo Seika Chemicals Company, Limited) and 3.67 parts by weight of crosslinked polyacrylic acid (CARBOPOL (registered trademark) 981 manufactured by Lubrizol Corporation) as hydrophilic resins, 13.58 parts by weight of a 48 wt% potassium hydroxide aqueous solution (manufactured by Kanto Chemical Co., Inc.) as an alkali metal, and 3.20 parts by weight of sarcosine (manufactured by Tokyo Chemical Industry Co., Ltd.) as an amino acid were added, and mixed to obtain a mixed liquid. The obtained mixed liquid was defoamed with a defoaming device ("rotation and revolution mixer AWATORI-RENTARO ARE-310" manufactured by THINKY) to obtain an application liquid (2).

(Production of gas separation membrane (6))

Except that application liquid (2) was used in place of application liquid (1), the same procedure as in Example 3 was carried out to produce a gas separation membrane (6) including a separation function layer (6). Using gas separation membrane (6), evaluation of permeability performance and evaluation of bleed-through were performed. The results are shown in Table 2.

[Example 7]

(Preparation of application liquid (3))

155.42 parts by weight of water, 0.73 parts by weight of non-crosslinked polyacrylic acid (PAA) (AQUPAANA "AP-40F") manufactured by Sumitomo Seika Chemicals Company, Limited) and 3.67 parts by weight of crosslinked polyacrylic acid (AQUPEC "HV -501E" manufactured by Sumitomo Seika Chemicals Company, Limited) as hydrophilic resins, 34.84 parts by weight of a 50 wt% cesium hydroxide aqueous solution (manufactured by Sigma-Ardrich) as an alkali metal, and 5.34 parts by weight of sarcosine (manufactured by Tokyo Chemical Industry Co., Ltd.) as an amino acid were added, and mixed to obtain a mixed liquid. The obtained mixed liquid was defoamed with a defoaming device ("rotation and revolution mixer AWATORI-RENTARO ARE-310" manufactured by THINKY) to obtain an application liquid (3).

(Production of gas separation membrane (7))

Except that application liquid (3) was used in place of application liquid (1), the same procedure as in Example 3 was carried out to produce a gas separation membrane (7) including a separation function layer (7). Using gas separation membrane (7), evaluation of permeability performance and evaluation of bleed-through were performed. The results are shown in Table 2.

[Example 8]

(Preparation of application liquid (4))

132.75 parts by weight of water, 0.73 parts by weight of non-crosslinked polyacrylic acid (PAA) (AQUPAANA "AP-40F") manufactured by Sumitomo Seika Chemicals Company, Limited) and 3.67 parts by weight of crosslinked polyacrylic acid (AQUPEC "HV -501E" manufactured by Sumitomo Seika Chemicals Company, Limited) as hydrophilic resins, 20.00 parts by weight of a 10 wt% polyvinyl alcohol aqueous solution (PVA 117 manufactured by KURARAY CO., LTD), 34.84 parts by weight of a 50 wt% cesium hydroxide aqueous solution (manufactured by Sigma-Ardrich) as an alkali metal, and 8.01 parts by weight of sarcosine (manufactured by Tokyo Chemical Industry Co., Ltd.) as an amino acid were added, and mixed to obtain a mixed liquid. The obtained mixed liquid was defoamed with a defoaming device ("rotation and revolution mixer AWATORI-RENTARO ARE-310" manufactured by THINKY) to obtain an application liquid (4).

(Production of gas separation membrane (8))

Except that application liquid (4) was used in place of application liquid (1), the same procedure as in Example 2 was carried out to produce a gas separation membrane (8) including a separation function layer (8). Using gas separation membrane (8), evaluation of permeability performance and evaluation of bleed-through were performed. The results are shown in Table 2.

[Example 9]

(Provision of first porous layer (6))

A PP porous membrane (Celgard (registered trademark) 2500) manufactured by Polypore, Inc.) was provided as first porous layer (6). Using a corona surface modification evaluation apparatus (TEC-4AX manufactured by KASUGA DENKI, INC.), one surface of first porous layer (6) was subjected to corona treatment under treatment condition (3) shown in Table 1, and the other surface was subjected to corona treatment under treatment condition (1) shown in Table 1. The wetting tension of the corona-treated surface of first porous layer (6) and the moisture absorption rate of first porous layer (6) were measured, and the maximum pore size and the average pore size were measured by the bubble point method. The results are shown in Table 2.

(Production of gas separation membrane (9))

Application liquid (1) provided as described above was applied to the surface of first porous layer (6), which had been corona-treated under treatment condition (3), with a tabletop applicator in such a manner that the thickness of separation function layer (9) immediately after drying was 50 μm, thereby forming a coating film. Subsequently, second porous layer (3) provided as described above was laminated on the coating film on first porous layer (6) with the coating film opposed to the corona-treated surface side of second porous layer (3). Thereafter, drying was performed at 100°C for 30 minutes to form a separation function layer (9), thereby obtaining a gas separation membrane (9). Using gas separation membrane (9), evaluation of permeability performance and evaluation of bleed-through were performed. The results are shown in Table 2.

[Example 10]

(Provision of first porous layer (7))

A PP porous membrane (Celgard (registered trademark) 2500) manufactured by Polypore, Inc.) was provided as first porous layer (7). Using a corona surface modification evaluation apparatus (TEC-4AX manufactured by KASUGA DENKI, INC.), one surface of first porous layer (7) was subjected to corona treatment under treatment condition (3) shown in Table 1, and the other surface was subjected to corona treatment under treatment condition (6) shown in Table 1. The wetting tension of the corona-treated surface of first porous layer (7) and the moisture absorption rate of first porous layer (7) were measured, and the maximum pore size and the average pore size were measured by the bubble point method. The results are shown in Table 2.

(Production of gas separation membrane (10))

Except that first porous layer (7) was used in place of first porous layer (6), the same procedure as in Example 9 was carried out to produce a gas separation membrane (10) including a separation function layer (10) on the surface of first porous layer (7), which had been corona-treated under treatment condition (3). Using gas separation membrane (10), evaluation of permeability performance and evaluation of bleed-through were performed. The results are shown in Table 2.

[Example 11]

(Provision of first porous layer (8) and second porous layer (6))

As a first porous layer (8) and second porous layer (6), a polyethylene (PE) porous film produced in accordance with the procedure described in Comparative Manufacturing Example 2 of Japanese Patent Laying-Open No. 2017-226119 was prepared. Using a corona surface modification evaluation apparatus (TEC-4AX manufactured by KASUGA DENKI, INC.), one surface of each of the first porous layer (8) and the second porous layer (6) was subjected to corona treatment under a treatment condition (7) shown in Table 1. The wetting tension of the corona-treated surface of first porous layer (8) and the moisture absorption rate of first porous layer (8) were measured, and the maximum pore size and the average pore size were measured by the bubble point method. The results are shown in Table 2.

(Production of gas separation membrane (11))

Except that first porous layer (8) and second porous layer (6) were used in place of first porous layer (1) and second porous layer (1), the same procedure as in Example 1 was carried out to produce a gas separation membrane (11) including a separation function layer (11). Using gas separation membrane (11), evaluation of permeability performance and evaluation of bleed-through were performed. The results are shown in Table 2.

[Comparative Example 1]

(Provision of first porous layer (9) and second porous layer (7))

Except that the treatment condition for corona treatment was changed to a treatment condition (8) shown in Table 1, the same procedure as in Example 1 was carried out to provide a first porous layer (9) and a second porous layer (7). The wetting tension of the corona-treated surface of first porous layer (9) and the moisture absorption rate of first porous layer (9) were measured, and the maximum pore size and the average pore size were measured by the bubble point method. The results are shown in Table 2.

(Production of gas separation membrane (12))

Except that first porous layer (9) and second porous layer (7) were used in place of first porous layer (1) and second porous layer (1), the same procedure as in Example 1 was carried out to produce a gas separation membrane (12) including a separation function layer (12). Using gas separation membrane (12), evaluation of permeability performance was performed. The results are shown in Table 2.

[Comparative Example 2]

(Provision of first porous layer (10) and second porous layer (8))

Except that the treatment condition for corona treatment was changed to a treatment condition (9) shown in Table 1, the same procedure as in Example 1 was carried out to provide a first porous layer (10) and a second porous layer (8). The wetting tension of the corona-treated surface of first porous layer (10) and the moisture absorption rate of first porous layer (10) were measured, and the maximum pore size and the average pore size were measured by the bubble point method. The results are shown in Table 2.

(Production of gas separation membrane (13))

Except that first porous layer (10) and second porous layer (8) were used in place of first porous layer (1) and second porous layer (1), the same procedure as in Example 1 was carried out to produce a gas separation membrane (13) including a separation function layer (13). Using gas separation membrane (13), evaluation of permeability performance was performed. The results are shown in Table 2.

[Comparative Example 3]

(Provision of first porous layer (11) and second porous layer (9))

Except that the treatment condition for corona treatment was changed to a treatment condition (10) shown in Table 1, the same procedure as in Example 1 was carried out to provide a first porous layer (11) and a second porous layer (9). The wetting tension of the corona-treated surface of first porous layer (11) and the moisture absorption rate of first porous layer (11) were measured, and the maximum pore size and the average pore size were measured by the bubble point method. The results are shown in Table 2.

(Production of gas separation membrane (14))

Except that first porous layer (11) and second porous layer (9) were used in place of first porous layer (1) and second porous layer (1), the same procedure as in Example 1 was carried out to produce a gas separation membrane (14) including a separation function layer (14). Using gas separation membrane (14), evaluation of permeability performance was performed. The results are shown in Table 2.

[Comparative Example 4]

(Provision of first porous layer (12) and second porous layer (10))

A polytetrafluoroethylene (PTFE) porous membrane (POREFLON "HP-010-50" manufactured by Sumitomo Electric Fine Polymer Inc.) was provided as each of the first porous layer (12) and the second porous layer (10). Using a corona surface modification evaluation apparatus (TEC-4AX manufactured by KASUGA DENKI, INC.), one surface of each of the first porous layer (12) and the second porous layer (10) was subjected to corona treatment under a treatment condition (11) shown in Table 1. The wetting tension of the corona-treated surface of first porous layer (12) and the moisture absorption rate of first porous layer (12) were measured, and the maximum pore size and the average pore size were measured by the bubble point method. The results are shown in Table 2.

Application liquid (1) was applied to the corona-treated surface of first porous layer (12) using a tabletop applicator, but repelling occurred, so that it was not possible to form a coating film, and thus a gas separation membrane was not produced.

[Table 1]

| Corona treatment condition | Discharge power [W] | Treatment speed [m/min] | Number of times of passing [number of times] |
|---|---|---|---|
| (1) | 40 | 0.5 | 1 |

(continued)

| Corona treatment condition | Discharge power [W] | Treatment speed [m/min] | Number of times of passing [number of times] |
|---|---|---|---|
| (2) | 70 | 1 | 1 |
| (3) | 80 | 1 | 1 |
| (4) | 85 | 1 | 1 |
| (5) | 65 | 0.8 | 1 |
| (6) | 85 | 1 | 10 |
| (7) | 35 | 0.5 | 1 |
| (8) | 18 | 1 | 1 |
| (9) | 85 | 0.5 | 1 |
| (10) | 75 | 1 | 10 |
| (11) | 100 | 0.5 | 10 |

Table 2]

| | | Corona treatment | | Wetting tension [mN/m] | Moisture absorption rate [wt%] | Maximum pore size [μm] | Average pore size [μm] | Separation function layer | Permeability performance | Bleed-through |
| | Type | Treated surface | Treatment condition | | | | | Application liquid | | |
|---|---|---|---|---|---|---|---|---|---|---|
| | | | | | first porous layer | | | | | |
| Example 1 | PP porous membrane | One surface | (1) | 38 | 0.08 | 0.065 | 0.043 | (1) | A | No |
| Example 2 | PP porous membrane | One surface | (2) | 42 | 0.12 | 0.065 | 0.04 | (1) | A | No |
| Example 3 | PP porous membrane | One surface | (3) | 48 | 0.16 | 0.064 | 0.044 | (1) | A | No |
| Example 4 | PP porous membrane | One surface | (4) | 52 | 0.15 | 0.066 | 0.045 | (1) | A | No |
| Example 5 | PP porous membrane | One surface | (5) | 44 | 0.05 | 0.176 | 0.094 | (1) | A | No |
| Example 6 | PP porous membrane | One surface | (3) | 48 | 0.16 | 0.064 | 0.044 | (2) | A | No |
| Example 7 | PP porous membrane | One surface | (3) | 48 | 0.16 | 0.064 | 0.044 | (3) | A | No |
| Example 8 | PP porous membrane | One surface | (2) | 42 | 0.12 | 0.065 | 0.04 | (4) | A | No |
| Example 9 | PP porous membrane | Both surfaces | (3)/(1)*1 | 48/38*1 | 0.15 | 0.064 | 0.044 | (1) | A | No |
| Example 10 | PP porous membrane | Both surfaces | (3)/(6)*1 | 48/≥70*1 | 0.21 | 0.066 | 0.045 | (1) | A | Present |
| Example 11 | PE porous membrane | One surface | (7) | 40 | 0.17 | 0.080 | 0.052 | (1) | A | No |
| Comparative Example 1 | PP porous membrane | One surface | (8) | 36 | 0.08 | 0.063 | 0.044 | (1) | B | - |
| Comparative Example 2 | PP porous membrane | One surface | (9) | 54 | 0.15 | 0.066 | 0.045 | (1) | B | - |

EP 4 183 477 A1

(continued)

| | first porous layer | | | | | | | Separation function layer | Permeability performance | Bleed-through |
|---|---|---|---|---|---|---|---|---|---|---|
| | Type | Corona treatment | | Wetting tension [mN/m] | Moisture absorption rate [wt%] | Maximum pore size [μm] | Average pore size [μm] | Application liquid | | |
| | | Treated surface | Treatment condition | | | | | | | |
| Comparative Example 3 | PP porous membrane | One surface | (10) | ≥70 | 0.17 | 0.066 | 0.046 | (1) | B | - |
| Comparative Example 4 | PTFE porous membrane | One surface | (11) | 32 | 0.02 | 0.220 | 0.113 | (1) | - | - |
| *1: First surface/second surface | | | | | | | | | | |

EP 4 183 477 A1

REFERENCE SIGNS LIST

1, 1a: gas separation membrane element, 3: feed-side flow path member, 4: permeate-side flow path member, 5: central tube, 10: gas separation membrane, 11: first porous layer, 11a: first surface, 11b: second surface, 12: second porous layer, 12a: third surface, 12b: fourth surface, 15: separation function layer, 50: hole, 51: feed-side end part, 52: discharge port, 53: discharge-side end part, 55: anti-telescope device, 61: gas separation membrane cell, 62: feed-side chamber, 63: permeate-side chamber, 64: cooling trap, 65: back pressure regulator, 66: cooling trap, 67: gas chromatograph, 68: metered liquid feed pump, 69: back pressure regulator, 71: decompression pump

**Claims**

1.  A gas separation membrane selectively permeable to a specific gas component,

    the gas separation membrane comprising a first porous layer, and a separation function layer provided on a first surface of the first porous layer,
    the separation function layer containing a hydrophilic resin,
    the first surface having a wetting tension of greater than or equal to 38 mN/m and less than or equal to 52 mN/m.

2.  The gas separation membrane according to claim 1, wherein the first porous layer has a moisture absorption rate of less than or equal to 0.20 wt% at a temperature of 30°C and a relative humidity of 75% RH.

3.  The gas separation membrane according to claim 1 or 2, wherein the first porous layer contains at least one of a polyolefin resin and a fluorine-containing resin.

4.  The gas separation membrane according to any one of claims 1 to 3, wherein the first porous layer contains one or more of polyethylene, polypropylene and polytetrafluoroethylene.

5.  The gas separation membrane according to any one of claims 1 to 4, wherein the first porous layer has a maximum pore size of less than or equal to 0.2 $\mu$m as measured by a bubble point method.

6.  The gas separation membrane according to any one of claims 1 to 5, wherein the first porous layer has an average pore size of less than or equal to 0.1 $\mu$m.

7.  The gas separation membrane according to any one of claims 1 to 6, wherein the first porous layer is a sheet-shaped or hollow porous material.

8.  The gas separation membrane according to any one of claims 1 to 7, wherein the separation function layer is gelled.

9.  The gas separation membrane according to any one of claims 1 to 8, wherein the separation function layer further contains an alkali metal compound.

10. The gas separation membrane according to any one of claims 1 to 9, wherein the separation function layer further contains one or more selected from the group consisting of an amino acid, an aminosulfonic acid and an aminophosphonic acid.

11. The gas separation membrane according to any one of claims 1 to 10, wherein the specific gas component is an acidic gas.

12. A method for manufacturing the gas separation membrane according to any one of claims 1 to 11, the method comprising:

    adjusting a wetting tension of the first surface to greater than or equal to 38 mN/m and less than or equal to 52 mN/m by performing surface activation treatment on the first porous layer; and
    applying an application liquid containing the hydrophilic resin to the first surface.

13. The method for manufacturing the gas separation membrane according to claim 12, wherein the surface activation treatment is at least one of corona treatment and plasma treatment.

14. A method for manufacturing a gas separation membrane selectively permeable to a specific gas component,

the gas separation membrane containing a first porous layer, and a gel-like separation function layer containing a hydrophilic resin,
the method comprising:

performing corona treatment on at least one surface of the first porous layer at an amount of treatment of greater than or equal to 90 W·min/m$^2$ and less than or equal to 800 W·min/m$^2$; and
applying an application liquid containing the hydrophilic resin to the surface subjected to corona treatment in the performing corona treatment,
the first porous layer being a sheet-shaped or hollow resin porous material.

15. The method for manufacturing the gas separation membrane according to claim 14, wherein the first porous layer contained in the gas separation membrane has a moisture absorption rate of less than or equal to 0.20 wt% at a temperature of 30°C and a relative humidity of 75% RH.

16. The method for manufacturing the gas separation membrane according to claim 14 or 15, wherein the resin porous material contains one or more of polyethylene, polypropylene and polytetrafluoroethylene.

17. A separation membrane element for separating a specific gas component from a source gas containing the specific gas component, the separation membrane element comprising: the gas separation membrane according to any one of claims 1 to 11;

a feed-side space for feeding the source gas to the gas separation membrane;
a permeation-side space for a permeate gas that has permeated the gas separation membrane; and
a sealing portion for preventing mixing of the source gas in the feed-side space and the permeate gas in the permeation-side space.

18. A separation membrane module comprising: the separation membrane element according to claim 17;

a source gas feeding port for feeding the source gas to the gas separation membrane;
a retentate gas discharge port for discharging the source gas that does not permeate the gas separation membrane; and
a permeate gas discharge port for discharging the permeate gas.

19. A gas separation device comprising the separation membrane module according to claim 18.

20. A gas separation method for separating a specific gas component by bringing a source gas containing at least the specific gas component into contact with the gas separation membrane according to any one of claims 1 to 11.

FIG.1

10

11a —— 15
—— 11
11b ——

FIG.2

10

12b ——
—— 12
12a —— —— 15
—— 11

FIG.3

FIG.4

FIG.5

## INTERNATIONAL SEARCH REPORT

| International application No. |
|---|
| PCT/JP2021/024167 |

**A. CLASSIFICATION OF SUBJECT MATTER**
B01D  69/06(2006.01)i;  B01D  69/08(2006.01)i;  B01D  69/12(2006.01)i;  B01D
71/02(2006.01)i;  B01D  71/26(2006.01)i;  B01D  71/36(2006.01)i;  B01D
53/22(2006.01)i
FI:      B01D69/12;  B01D53/22;  B01D69/06;  B01D69/08;  B01D71/02  500;
      B01D71/26;  B01D71/36

According to International Patent Classification (IPC) or to both national classification and IPC

**B. FIELDS SEARCHED**

Minimum documentation searched (classification system followed by classification symbols)
B01D53/22, 61/00-71/82

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 61-161109 A (TOKUYAMA SODA CO., LTD.) 21 July 1986 (1986-07-21) claims, page 2, upper left column, line 13 to page 4, upper left column, line 15, examples, table 1 | 1-7, 9-10, 12-13, 17-20 |
| Y | JP 59-203602 A (ASAHI KASEI INDUSTRY CO., LTD.) 17 November 1984 (1984-11-17) page 6, upper right column, line 20 to page 6, lower right column, line 6 | 1-7, 9-10, 12-13, 17-20 |
| Y | JP 2008-210794 A (ASAHI KASEI CHEMICALS CORP.) 11 September 2008 (2008-09-11) claim 1, paragraphs [0032]-[0033] | 12-13 |
| A | JP 2006-130453 A (NIIGATA UNIVERSITY) 25 May 2006 (2006-05-25) | 1-20 |
| A | JP 60-114324 A (MATSUSHITA ELECTRIC INDUSTRIAL CO., LTD.) 20 June 1985 (1985-06-20) | 1-20 |

☒ Further documents are listed in the continuation of Box C.     ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 24 August 2021 (24.08.2021) | 07 September 2021 (07.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/024167

C (Continuation).   DOCUMENTS CONSIDERED TO BE RELEVANT

| Category* | Citation of document, with indication, where appropriate, of the relevant passages | Relevant to claim No. |
|---|---|---|
| A | US 5131927 A (UNION CARBIDE INDUSTRIAL GASES TECHNOLOGY CORPORATION) 21 July 1992 (1992-07-21) | 1-20 |
| A | JP 2011-74257 A (UBE INDUSTRIES, LTD.) 14 April 2011 (2011-04-14) | 1-20 |
| A | JP 2017-29975 A (PALL CORPORATION) 09 February 2017 (2017-02-09) | 1-20 |

Form PCT/ISA/210 (continuation of second sheet) (January 2015)

INTERNATIONAL SEARCH REPORT
Information on patent family members

| International application no. |
|---|
| PCT/JP2021/024167 |

| Patent Documents referred in the Report | Publication Date | Patent Family | Publication Date |
|---|---|---|---|
| JP 61-161109 A | 21 Jul. 1986 | (Family: none) | |
| JP 59-203602 A | 17 Nov. 1984 | (Family: none) | |
| JP 2008-210794 A | 11 Sep. 2008 | EP 2116372 A1 paragraphs [0032]-[0033], claim 1 US 2010/0285348 A1 WO 2008/093575 A1 | |
| JP 2006-130453 A | 25 May 2006 | (Family: none) | |
| JP 60-114324 A | 20 Jun. 1985 | EP 144054 A2 | |
| US 5131927 A | 21 Jul. 1992 | JP 5-137978 A EP 510574 A1 DE 69211414 T2 | |
| JP 2011-74257 A | 14 Apr. 2011 | (Family: none) | |
| JP 2017-29975 A | 09 Feb. 2017 | US 2017/0028359 A1 EP 3130394 A1 CN 106390778 A | |

Form PCT/ISA/210 (patent family annex) (January 2015)

**EP 4 183 477 A1**

**REFERENCES CITED IN THE DESCRIPTION**

**Patent documents cited in the description**

- JP 6130607 B
- JP 2003268009 A
- JP 7088171 A
- WO 2016024523 A
- JP 2017226119 A